# EUROPEAN PATENT SPECIFICATION

(11) **EP 3 211 125 B1**
(45) Date of publication and mention of the grant of the patent: **25.11.2020**
(21) Application number: 15852742.4
(22) Date of filing: 04.09.2015
(51) Int. Cl.: C25B 11/06, C25B 11/04, C25B 11/16, H01M 4/90, C01G 45/02, B01J 23/34, B01J 35/02, H01M 4/92, B01J 37/08, B01J 35/00, B01J 35/10, B01J 37/02

(54) **OXYGEN-GENERATING CATALYST, ELECTRODE AND ELECTROCHEMICAL REACTION SYSTEM**
SAUERSTOFFERZEUGENDER KATALYSATOR, ELEKTRODE UND ELEKTROCHEMISCHES REAKTIONSSYSTEM
CATALYSEUR DE GÉNÉRATION D'OXYGÈNE, ÉLECTRODE ET SYSTÈME DE RÉACTION ÉLECTROCHIMIQUE

(30) Priority: 21.10.2014 KR 20140142622
(43) Date of publication of application: 30.08.2017
(73) Proprietor: Seoul National University R&DB Foundation, Gwanak-gu Seoul 08826 (KR); Global Frontier Center for Multiscale Energy Systems, Seoul 08826 (KR)
(72) Inventor: NAM, Ki-Tae, Seoul 06090 (KR); JIN, Kyoung-Suk, Bucheon-si Gyeonggi-do 14749 (KR); JEONG, Dong-Hyuk, Eumseong-gun Chungcheongbuk-do 27662 (KR); JERNG, Sung-Eun, Seoul 07039 (KR)
(74) Representative: Shearman, James Ward
(86) International application number: PCT/KR2015/009349
(87) International publication number: WO 2016/064086

(56) References cited:
- WO-A1-2013/127920
- WO-A1-2013/175327
- US-A1- 2006 093 892
- US-A1- 2010 216 049
- US-A1- 2011 151 356
- US-A1- 2012 183 869
- US-A1- 2012 328 505
- IMRAN JAFRI R ET AL: "Au-MnO"2/MWNT and Au-ZnO/MWNT as oxygen reduction reaction electrocatalyst for polymer electrolyte membrane fuel cell", INTERNATIONAL JOURNAL OF HYDROGEN ENERGY, ELSEVIER SCIENCE PUBLISHERS B.V., BARKING, GB, vol. 34, no. 15, 4 July 2009 (2009-07-04), pages 6371-6376, XP026375069, ISSN: 0360-3199 [retrieved on 2009-07-04]
- CHANG, SHERY L. Y. ET AL.: 'Nanoscale structural disorder in manganese oxide particles embedded in Nation' JOURNAL OF MATERIALS CHEMISTRY A vol. 2, 07 February 2014, pages 3730 - 3733, XP055382458
- SINGH, ARCHANA ET AL.: 'Water oxidation catalysis by nanoparticulate manganese oxide thin films: Probing the effect of the manganese precursors' CHEMISTRY OF MATERIALS vol. 25, 12 March 2013, pages 1098 - 1108, XP055382461
- RAMIREZ, ALEJANDRA ET AL.: 'Evaluation of MnOx, Mn2O3, and Mn3O4 electrodeposited films for the oxygen evolution reaction of water' JOURNAL OF PHYSICAL CHEMISTRY vol. 118, 13 June 2014, pages 14073 - 14081, XP055382463
- HIRAMOTO, MAKI ET AL.: 'Control of nonstoichiometric defects in manganese oxides by self-propagating high-temperature synthesis' MATERIALS CHEMISTRY AND PHYSICS vol. 134, 15 May 2012, pages 98 - 102, XP028417094
- BUSCH, MICHAEL ET AL.: 'Water oxidation on MnOx and IrOx: Why similar performance?' JOURNAL OF PHYSICAL CHEMISTRY vol. 117, 10 December 2012, pages 288 - 292, XP055382466

## Description

### [Technical Field]

The present disclosure relates to an oxygen evolution catalyst, an electrode, and an electrochemical reaction system and, more particularly, to a catalyst used for an oxygen evolution reaction or oxygen reduction reaction, an electrode using the same, and an electrochemical reaction system.

### [Background Art]

Recently, in order to solve environmental problems caused by the depletion of carbon-based energy and emissions from fuel gas, research into methods of saving energy by producing hydrogen and oxygen through water decomposition or obtaining energy through fuel cells has been actively undertaken. In the methods described above, an electrochemical reaction is used. In the cases of an oxygen evolution reaction using water decomposition and an oxygen reduction reaction using a fuel cell, since a reaction rate is slow, the reaction described above acts as a rate determining step. Thus, in order to increase an oxygen generation rate or an oxygen reduction rate, an electrocatalyst is required.

US 2012/183869 A1 relates to a catalyst including active particles that have a core comprising a first metal oxide, and a shell comprising an alloy of a second metal with a reduction product of the first metal oxide.

US 2010/216049 A1 relates to an electrode catalyst composition comprising a trivalent manganese-containing compound.

WO 2013/175327 A1 relates to a process for producing carbon-supported manganese oxide catalysts.

US 2012/328505 A1 relates to a composition comprising a nanostructured transition metal oxide capable of oxidizing two H₂O molecules to obtain four protons.

### [Disclosure]

### [Technical Problem]

An aspect of the present disclosure may provide an oxygen evolution catalyst having improved catalyst characteristics under neutral conditions, an electrode, and an electrochemical reaction system.

### [Technical Solution]

According to the present invention there is provided an oxygen evolution catalyst according to claim 1.

The manganese oxide may perform a catalytic function under neutral conditions.

The manganese oxide may be a nanoparticle having a size of 20 nm or less.

The manganese oxide may allow oxygen gas to be generated from water at an overpotential of 510 mV or less at an electrode current density of 5 mA/cm² or more.

The manganese oxide may have a form of a thin film.

According to an aspect of the present disclosure, an oxygen evolution catalyst includes: a nanocore including a manganese oxide; and a metal nanoparticle adsorbed on a surface of the nanocore.

The metal nanoparticle may include at least one of iridium (Ir), cobalt (Co), copper (Cu), nickel (Ni), iron (Fe), chromium (Cr), ruthenium (Ru), gold (Au), platinum (Pt), palladium (Pd), and rhodium (Rh).

The nanocore may have a size of 20 nm or less, and the metal nanoparticle may have a size of 3 nm or less.

The oxygen evolution catalyst may allow oxygen gas to be generated from water at an overpotential of 280 mV or less at an electrode current density of 10 mA/cm² or more.

According to an aspect of the present disclosure, an electrode includes an oxygen evolution catalyst.

According to an aspect of the present disclosure, an electrochemical reaction system includes an oxygen evolution catalyst.

### [Advantageous Effects]

An oxygen evolution catalyst having improved catalyst characteristics under neutral conditions, an electrode, and an electrochemical reaction system may be provided.

The various and advantageous advantages and effects of the present disclosure are not limited to the above description, and may be more easily understood in the course of describing a specific embodiment of the present disclosure.

### [Description of Drawings]

FIG. 1 is a flow chart illustrating a method of manufacturing manganese oxide according to an exemplary embodiment.
FIGS. 2A and 2B are electron micrographs of manganese oxide according to an exemplary embodiment.
FIG. 3 is a graph illustrating an X-ray diffraction (XRD) result of manganese oxide according to an exemplary embodiment.
FIG. 4 is a graph illustrating an analysis result of X-ray photoelectron spectroscopy (XPS) of manganese oxide according to an exemplary embodiment.
FIG. 5 is a flow chart illustrating a method of manufacturing a nanostructure including manganese oxide according to an exemplary embodiment.
FIG. 6 is a schematic perspective view of a nanostructure including manganese oxide according to an exemplary embodiment.
FIGS. 7A and 7B are electron micrographs of a nanostructure including manganese oxide according to an exemplary embodiment.
FIGS. 8 to 10 are graphs illustrating catalyst characteristics of manganese oxide according to an exemplary embodiment.
FIGS. 11 and 12 are graphs illustrating catalyst characteristics of a nanostructure including manganese oxide according to an exemplary embodiment.
FIG. 13 is a schematic view of a water decomposition system including an oxygen evolution catalyst according to an exemplary embodiment.
FIG. 14 is a schematic view of a fuel cell system including an oxygen evolution catalyst according to an exemplary embodiment.

### [Best Mode for Invention]

Hereinafter, preferred exemplary embodiments of the present disclosure will be described with reference to the accompanying drawings.

Exemplary embodiments of the present disclosure may be modified in various forms or various exemplary embodiments may be combined with each other, and the scope of the present disclosure is not limited to the exemplary embodiments described below. Furthermore, exemplary embodiments of the present disclosure are provided to more fully describe the present disclosure to those skilled in the art. Accordingly, the shape, size, and the like of the elements in the drawings may be exaggerated for clarity of description, and elements indicated by the same reference numerals in the drawings are the same elements.

### Manufacturing of manganese oxide and manganese oxide nanoparticle

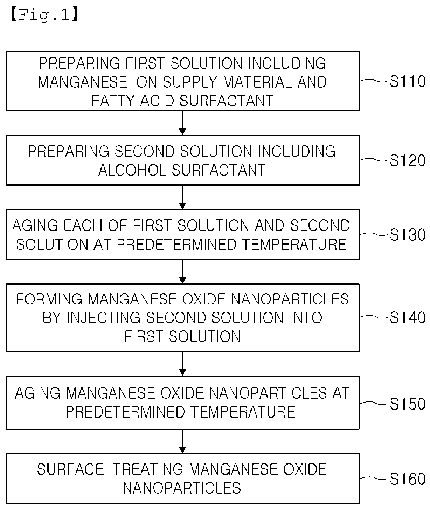

FIG. 1 is a flow chart illustrating a method of manufacturing manganese oxide according to an exemplary embodiment. In FIG. 1, a method of manufacturing manganese oxide in the form of a nanoparticle is exemplarily described.

With reference to FIG. 1, a method of manufacturing a manganese oxide nanoparticle according to an exemplary embodiment may include preparing a first solution including a manganese ion supply material and a fatty acid surfactant S110, preparing a second solution including an alcohol surfactant S120, aging each of the first solution and the second solution at a predetermined temperature S130, forming a manganese oxide nanoparticle by injecting the second solution into the first solution S140, and aging the manganese oxide nanoparticle at a predetermined temperature S150. In addition, the method of manufacturing a manganese oxide nanoparticle according to an exemplary embodiment may further include surface-treating the manganese oxide nanoparticle S160.

The manganese oxide has a non-stiochiometric composition, and is represented by Chemical formula (1),

Chemical formula (1) Mn_{1-δ}O

where δ satisfies 0 < δ < 0.25, 0.25 < δ < 1/3, and 1/3 < δ < 0.5.

Hereinafter, the non-stiochiometric composition may be understood to refer to a thermodynamically stable quantitative relationship between manganese and oxygen in a compound composed of manganese and oxygen. A stoichiometric manganese oxide may include MnO, Mn₃O₄ Mn₂O₃, and MnO₂.

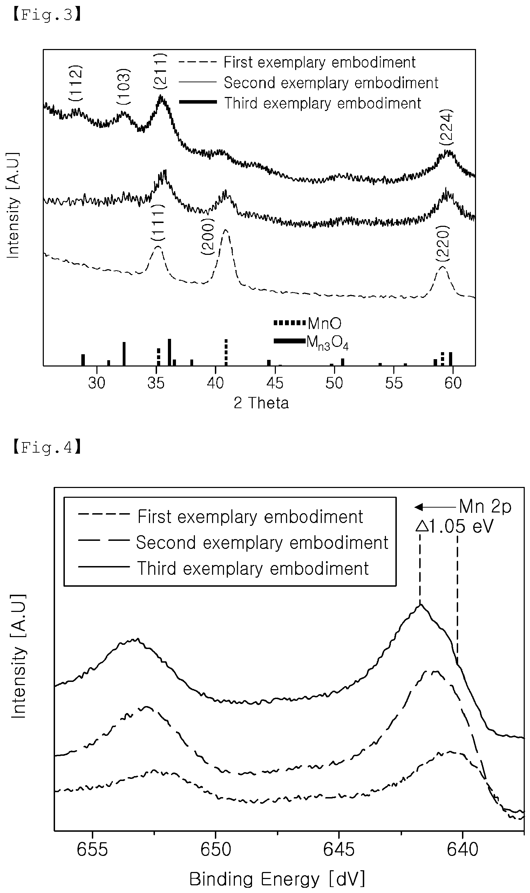

The manganese oxide includes trivalent manganese (Mn^{III}), and the trivalent manganese (Mn^{III}) is Located on a surface of the manganese oxide. The trivalent manganese (Mn ^{III}) located on the surface of the manganese oxide may be in a thermodynamically unstable state. In addition, the trivalent manganese (Mn^{III}) located on the surface of the manganese oxide may have the form of a type of defect not located inside a lattice structure. All of trivalent manganese (Mn^{III}) and divalent manganese : are located on the surface of the manganese oxide, which will be described in more detail with reference to FIGS. 3 and 4.

In the preparing a first solution including the manganese ion supply material and a fatty acid surfactant S110, the manganese ion supply material and the fatty acid surfactant were mixed in an organic solvent to prepare the first solution. The fatty acid surfactant may help a manganese ion supply material with dissolution, and may be used for dispersion of a manganese oxide nanoparticle formed in S140, a subsequent operation. The fatty acid surfactant may be, for example, myristic acid, stearic acid, oleic acid, or the like, and may be in a solution state whose concentration is 0.1 M to 0.5 M. The manganese ion supply material may be, for example, manganese acetate. The first solution may be a cationic solution, and a concentration of a cation may be 0.5 mM to 2 mM.

In the preparing a second solution including the alcohol surfactant S120, the alcohol surfactant may be, for example, decanol, myristyl alcohol, stearyl alcohol, or the like, and may be mixed with an organic solvent to prepare the second solution. The alcohol surfactant may be involved in nucleation and growth. In S110 and S120, the organic solvent may be, for example, octadecene or hexadecylamine.

The aging each of the first solution and the second solution at a predetermined temperature S130 may be performed at temperatures of 250°C to 300°C, respectively. Aging time may be, for example, about 1 hour.

In the forming a manganese oxide nanoparticle by injecting the second solution into the first solution S140, a manganese oxide nanoparticle may be formed though hot injection and pyrolysis. The forming a manganese oxide nanoparticle may be performed at a temperature of 250°C to 300°C.

The aging the manganese oxide nanoparticle at a predetermined temperature S150 may be performed in a time of 1 minute to 24 hours after the second solution is injected, and a size of the manganese oxide nanoparticle, having been prepared, may be controlled by adjusting aging time. The size of the manganese oxide nanoparticle may be, for example, 1 nm to 100 nm. In an exemplary embodiment, the size of the manganese oxide nanoparticle may be determined by a ratio of the manganese ion supply material and the fatty acid surfactant, and the ratio thereof may be, for example, in the range of 1:2 to 1:6. As a ratio of the fatty acid surfactant is lower, a size of the manganese oxide nanoparticle may be reduced.

The surface-treating the manganese oxide nanoparticle S160 may be an operation for removing a ligand on a surface of the manganese oxide nanoparticle. Since the ligand is formed as the fatty acid surfactant is adsorbed on the surface of the manganese oxide nanoparticle and conductivity thereof is poor, the ligand is required to be removed so as to use the manganese oxide nanoparticle as a catalyst. The surface-treating the manganese oxide nanoparticle may be performed by immersing the manganese oxide nanoparticle having been prepared in a basic solution, for example, ammonia water (NH₄OH), sodium hydroxide (NaOH), or the like. Alternatively, the surface-treating the manganese oxide nanoparticle may be performed by heat treatment. In detail, as a surface of the manganese oxide nanoparticle is partially oxidized in the surface-treating the manganese oxide nanoparticle, the manganese oxide nanoparticle may include trivalent manganese (Mn^{III}).

In the case of an exemplary embodiment illustrated in FIG. 1, a method of preparing the manganese oxide as a nanoparticle is illustrated, but the present disclosure is not limited thereto. For example, the manganese oxide may be prepared to have the form of a thin film. In this case, manganese oxide may be prepared using a method of coating a manganese oxide nanoparticle described above, a deposition method such as electrodeposition or sputtering, or the like.

### Structure of manganese oxide nanoparticle and composition analysis thereof

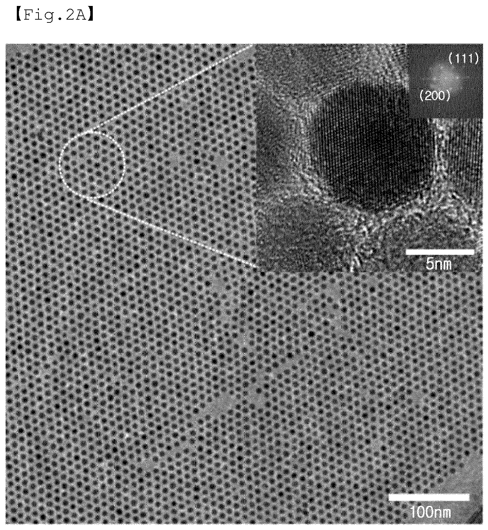

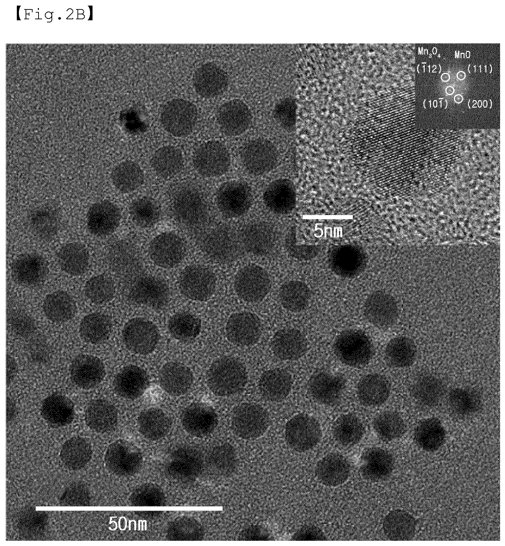

FIGS. 2A and 2B are electron micrographs of manganese oxide according to an exemplary embodiment.

With reference to FIG. 2A, the manganese oxide nanoparticle, having been prepared in S110 to S150 of an exemplary embodiment illustrated in FIG. 1, is analyzed by a transmission electron microscope (TEM). In this case, the manganese oxide nanoparticle has a size of 10 nm or less. In addition, according to a diffraction pattern analysis result of TEM, a (200) plane and a (111) plane, a crystal plane of manganese oxide having a composition of MnO, may be indexed.

With reference to FIG. 2B, the manganese oxide nanoparticle, having been prepared in S110 to S160 of an exemplary embodiment in FIG. 1, is analyzed by TEM. In detail, the manganese oxide nanoparticle used for analysis is treated with ammonia water (NH₄OH) for 1 hour in S160. In FIG. 2B, the manganese oxide nanoparticle may have a size of 10 nm or less. In addition, according to a diffraction pattern analysis result of TEM, a (10-1) plane and a (-112) plane, a crystal plane of manganese oxide having a composition of Mn₃O₄ may be indexed with a (200) plane and a (111) plane, a crystal plane of manganese oxide having a composition of MnO. Thus, it is confirmed that, in S160, a surface of the manganese oxide nanoparticle having been prepared is partially oxidized.

FIG. 3 is a graph illustrating an X-ray diffraction (XRD) result of manganese oxide according to an exemplary embodiment.

With reference to FIG. 3, crystal structure analysis results of a manganese oxide nanoparticle prepared in S110 to S150 of an exemplary embodiment illustrated in FIG. 1 (a first exemplary embodiment), and manganese oxide nanoparticles prepared in S110 to S160 of an exemplary embodiment illustrated in FIG. 1 (a second exemplary embodiment and a third exemplary embodiment) are shown. In the case of the second exemplary embodiment, a treatment in S160 was performed using ammonia water (NH₄OH) for 1 hour. In the case of the third exemplary embodiment, a treatment in S160 was performed using ammonia water (NH₄OH) for 24 hours.

The manganese oxide nanoparticle according to the first exemplary embodiment has a composition of MnO having a rock salt structure, and thus, signals of a (111) plane, a (200) plane, and a (220) plane of MnO may be shown. The manganese oxide nanoparticle according to the third exemplary embodiment has a composition of Mn₃O₄ having a spinel structure or a composition similar thereto, and thus, signals of a (211) plane and a (103) plane of Mn₃O₄ may be shown. In the case of the second exemplary embodiment, a surface of a manganese oxide nanoparticle is partially oxidized. Thus, all signals of a (111) plane, a (200) plane, and a (220) plane of MnO, in addition to a (211) plane and a (103) plane of Mn₃O₄ are shown, and a level of a signal of the (200) plane of MnO may appear to be lower than that according to the first exemplary embodiment.

FIG. 4 is a graph illustrating an analysis result of X-ray photoelectron spectroscopy (XPS) of manganese oxide according to an exemplary embodiment.

With reference to FIG. 4, in a manner similar to FIG. 3, composition analysis results of manganese oxide nanoparticles according to the first to third exemplary embodiments are shown. When the first exemplary embodiment is compared to the third exemplary embodiment, it is confirmed that binding energy of manganese 2p orbital is increased by about 1.05 eV. In this regard, like the second exemplary embodiment, when S160 is performed and a surface of a manganese oxide nanoparticle is partially oxidized, it is confirmed that trivalent manganese (Mn^{III}) is formed. Thus, it is confirmed that a manganese oxide nanoparticle according to the second exemplary embodiment has all of divalent manganese and trivalent manganese (Mn^{III}) formed on a surface thereof.

In addition, through an X-ray absorption near-edge structure (XANES), a manganese oxide nanoparticle according to the second exemplary embodiment is determined to have an oxidation state of 2.3296, and thus, it is confirmed that the manganese oxide nanoparticle has all of divalent manganese and trivalent manganese (Mn^{III}) formed on a surface thereof. In addition, it is determined that a manganese oxide nanoparticle according to the first exemplary embodiment has an oxidation state of 2.188, and a manganese oxide nanoparticle according to the third exemplary embodiment has an oxidation state substantially the same as in the case of a composition of Mn₃O₄.

### Manufacturing of nanostructure including manganese oxide

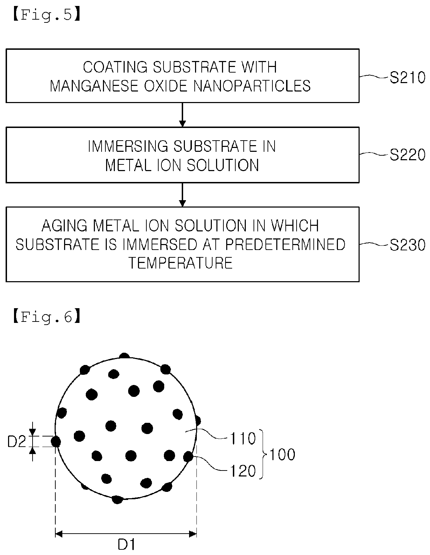

FIG. 5 is a flow chart illustrating a method of manufacturing a nanostructure including manganese oxide according to an exemplary embodiment.

FIG. 6 is a schematic perspective view of a nanostructure including manganese oxide according to an exemplary embodiment.

With reference to FIG. 5, a method of manufacturing a nanostructure including manganese oxide according to an exemplary embodiment may include coating a substrate with a manganese oxide nanoparticle, according to an exemplary embodiment illustrated in FIG. 1, S210, immersing the substrate in a metal ion solution S220, and aging the metal ion solution, in which the substrate is immersed, at a predetermined temperature S230.

For the coating a substrate with the manganese oxide nanoparticle S210, a method such as spin-coating, drop-casting, or the like, may be used. The substrate may be, for example, glassy carbon, but is not limited thereto.

In the immersing the substrate in a metal ion solution S220, the metal ion solution may include at least one cation of iridium (Ir), cobalt (Co), copper (Cu), nickel (Ni), iron (Fe), chromium (Cr), ruthenium (Ru), gold (Au), platinum (Pt), palladium (Pd), and rhodium (Rh). The metal ion solution may include at least one of acetate, nitrate, and chloride. A concentration of a metal cation inside the metal ion solution may be 1 mM to 50 mM.

In the aging the metal ion solution, in which the substrate is immersed, at a predetermined temperature S230, a metal nanoparticle may be formed on the surface of the manganese oxide nanoparticle. The aging may be performed at a temperature of 60°C to 100°C. In addition, aging time may be 30 minutes to 24 hours. Depending on the aging time, a size of the metal nanoparticle formed on the surface of the manganese oxide nanoparticle may be controlled.

In an exemplary embodiment, the manganese oxide nanoparticle, in the coating a substrate with the manganese oxide nanoparticle S210, may be a manganese oxide nanoparticle, in which S160 illustrated in FIG. 1 is not performed. In this case, S160 may be performed immediately after coating a substrate with the manganese oxide nanoparticle S210.

With reference to FIG. 6, in an exemplary embodiment, a nanostructure 100, including a nanocore 110, a manganese oxide nanoparticle containing trivalent manganese, and a metal nanoparticle 120 adsorbed on a surface of the nanocore 110, may be manufactured.

The nanocore 110 may have a non-stiochiometric composition, and may be represented by Chemical formula (1). The nanocore 110 may include trivalent manganese (Mn^{III}) formed on a surface thereof. In detail, the nanocore 110 may be manganese oxide having a structure, corresponding to the second exemplary embodiment illustrated in FIGS. 2B, 3, and 4.

The metal nanoparticles 120 may be at least one of iridium (Ir), cobalt (Co), copper (Cu), nickel (Ni), iron (Fe), chromium (Cr), ruthenium (Ru), gold (Au), platinum (Pt), palladium (Pd), rhodium (Rh), and alloys thereof.

A plurality of metal nanoparticles 120 may be formed on a surface of a single nanocore 110. A size D1 of the nanocore 110 may be 20 nm or less, in detail, 10 nm or less, and a size D2 of the metal nanoparticle 120 may be 1 nm to 10 nm, in detail, 3 nm or less.

### Structure of nanostructure including manganese oxide

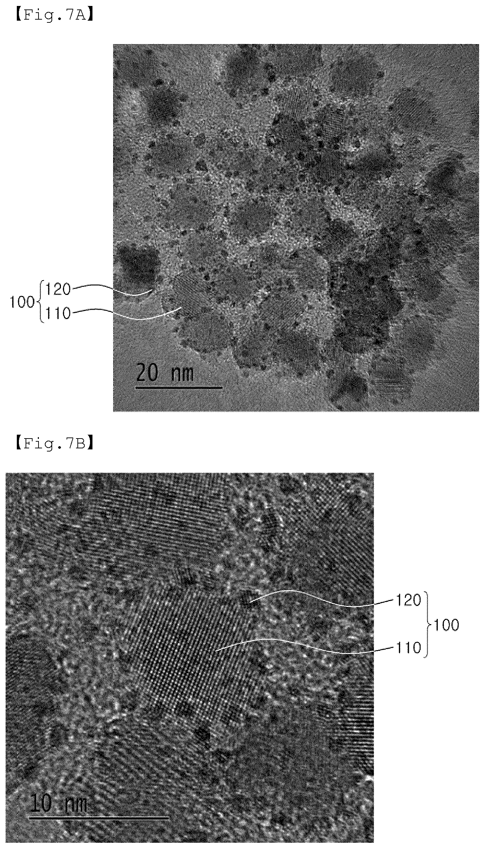

FIGS. 7A and 7B are electron micrographs of a nanostructure including manganese oxide according to an exemplary embodiment.

With reference to FIGS. 7A and 7B, a nanostructure including manganese oxide, prepared in an exemplary embodiment illustrated in FIG. 5, is analyzed by TEM. The nanostructure 100 may include the nanocore 110 of manganese oxide and the metal nanoparticles 120 adsorbed on the nanocore. The metal nanoparticles 120 may be substantially uniformly adsorbed on a surface of the nanocore 110. In detail, in an exemplary embodiment, the metal nanoparticles 120 may include iridium (Ir) .

### Catalyst characteristics of manganese oxide

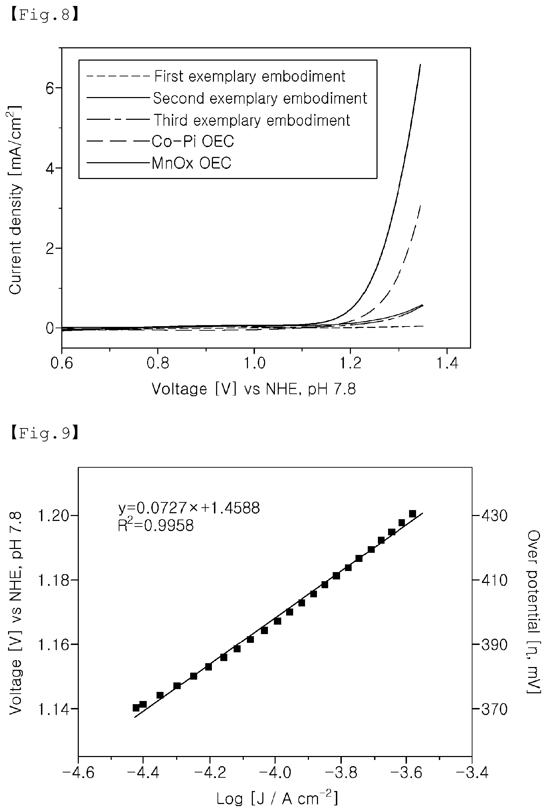

FIGS. 8 to 10 are graphs illustrating catalyst characteristics of manganese oxide according to an exemplary embodiment.

Hereinafter, catalyst characteristics are provided, by measuring electrochemical characteristics by manufacturing an electrode by coating a conductive substrate with powder, after manganese oxide having a size of about 10 nm, manufactured according to exemplary embodiments of the present disclosure, is mixed with a carbon additive and dried to form the powder.

The powder may be used, for example, for coating the conductive substrate by spin-coating. In this case, a rotation speed may be in the range of 2000 rpm to 4000 rpm. In addition, coating time may be in the range of 10 seconds to 60 seconds. Electrochemical characteristics may be measured using a 3-electrode cell or 2-electrode cell, filled with a buffer electrolyte aqueous solution. In detail, the 3-electrode cell may be comprised of a working electrode coated with a catalyst, a counter electrode formed of a platinum (Pt) wire or Pt plate, and a reference electrode of silver/silver chloride (Ag/AgCl), and the 2-electrode cell may be comprised of a working electrode and a counter electrode without a reference electrode. For the buffer electrolyte aqueous solution, a sodium phosphate or potassium phosphate solution of pH 7.8 is used.

With reference to FIG. 8, a cyclic voltammogram in the case in which a catalyst of manganese oxide according to an exemplary embodiment is used is illustrated compared to a normal hydrogen electrode (NHE).

Catalyst characteristics are illustrated with respect to the first to third exemplary embodiments, described with reference to FIGS. 3 and 4, in addition to the cases of a cobalt phostate (Co-Pi) oxygen evolution catalyst (OEC) and a manganese oxide (MnOₓ) OEC, as a comparative example. The Co-Pi OEC and the MnOₓ OEC were prepared by electrodeposition.

In the case of the second exemplary embodiment, the optimal catalyst characteristics are shown, and better characteristics are shown, as compared to those of the Co-Pi OEC. In this regard, because, in the case of the second exemplary embodiment, trivalent manganese (Mn^{III}) in an unstable state, formed on a surface of a manganese oxide nanoparticle, may be involved in catalytic action. In addition, when an overpotential value, a value obtained by subtracting an equilibrium potential of a reaction from an electrode potential in an electrochemical reaction, is calculated, in the case of a manganese oxide nanoparticle according to the second exemplary embodiment, the value of about 510 mV or less at an electrode current density of 5 mA/cm² or more is shown. Here, as compared to manganese (Mn), iron (Fe), cobalt (Co), nickel (Ni), and copper (Cu)-based solid catalysts, higher activity is shown.

In the case of the first exemplary embodiment, relatively low catalyst characteristics are shown. In this regard, it may be interpreted because conductivity is low due to a ligand surrounding a manganese oxide nanoparticle.

In the case of the third exemplary embodiment, a surface composition is similar to that of Mn₃O₄ and relatively low catalyst characteristics are shown. Here, in the case of the third exemplary embodiment in which treatment is performed for 24 hours by ammonia water (NH₄OH) in S160 illustrated in FIG. 1, a surface of manganese oxide is completely oxidized, and thus, the surface thereof may be in a stable state. In a manner different from the second exemplary embodiment, it is determined to be stoichiometric manganese oxide or in a state similar thereto. As an additional experimental result, in the case in which treatment time using ammonia water (NH₄OH) is about 1 hour, the optimal catalyst characteristics are provided. In the case in which treatment time is 30 minutes to 2 hours, lower catalyst characteristics are provided. In the case in which treatment time is greater than 2 hours, catalyst characteristics gradually decrease. Here, optimized treatment time may be changed depending on a size of a manganese oxide nanoparticle, a process condition, and the like.

Additionally, as a result of measuring catalyst characteristics with respect to manganese oxide nanoparticles having different sizes of 10 nm, 15 nm, and 20 nm, cyclic voltammograms have a form slightly shifted from each other on an x-axis. Among the catalyst characteristics, in the case the same as the second exemplary embodiment in which a manganese oxide nanoparticle has a size of 10 nm, the optimal catalyst characteristics are shown.

With reference to FIG. 9, a measurement result of a Tafel slope is shown. The Tafel slope is a standard of electrode activity, and indicates a voltage required for increasing a level of a current 10 times. In the case of the second exemplary embodiment, a Tafel slope indicating an electrochemical reaction rate, having been measured, is about 72 mV/decade, a lower value compared to different manganese oxides, having a Tafel slope of about 120 mV/decade, (MnO, Mn₃O₄ Mn₂O₃, and MnO₂). Thus, it is confirmed that a manganese oxide nanoparticle according to the second exemplary embodiment has high activity.

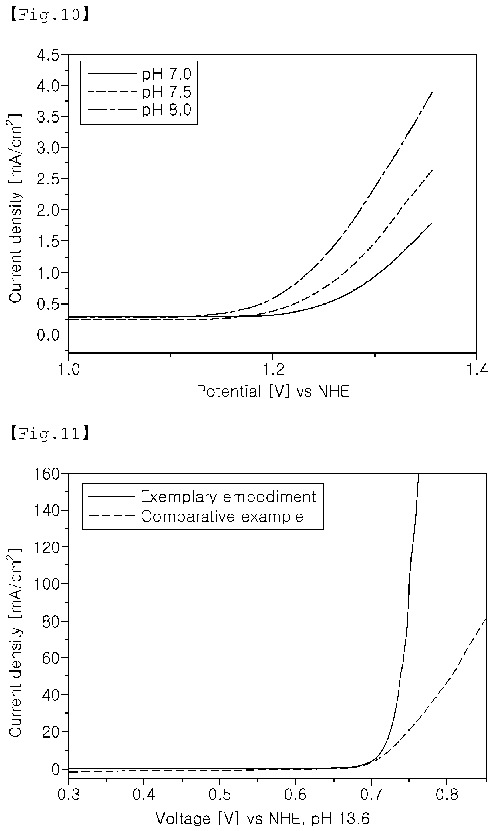

With reference to FIG. 10, when a catalyst of a manganese oxide nanoparticle according to the second exemplary embodiment is used, dependence depending on the pH is shown. As pH is higher, current density at the same potential is higher. In this regard, a proton may be involved in an electrochemical reaction. However, in the case of an exemplary embodiment of the present disclosure, it is confirmed that relatively excellent catalyst characteristics are shown even at pH 7.0, neutral conditions.

### Catalyst characteristics of nanostructure including manganese oxide

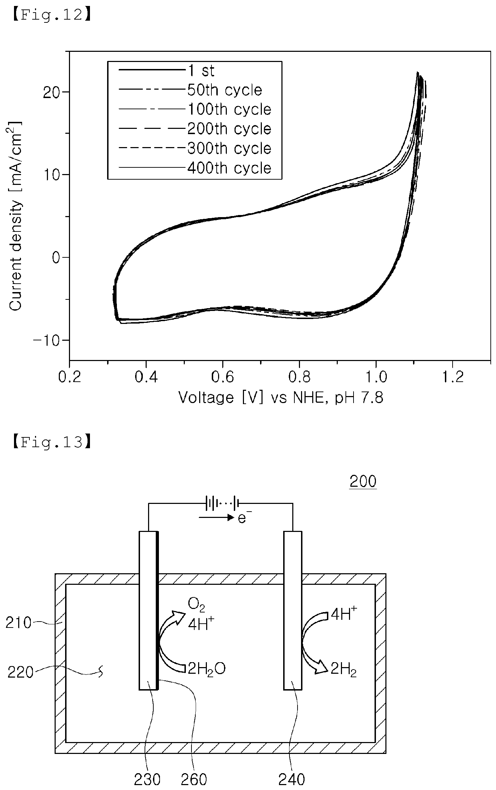

FIGS. 11 and 12 are graphs illustrating catalyst characteristics of a nanostructure including manganese oxide according to an exemplary embodiment.

Catalyst characteristics are provided, by measuring electrochemical characteristics by manufacturing an electrode by coating a conductive substrate with powder, after a nanostructure according to an exemplary embodiment described with reference to FIGS. 5 to 7B is mixed with a carbon additive and dried to form the powder. In an exemplary embodiment, metal nanoparticles inside the nanostructure include iridium (Ir). Other detailed descriptions related to catalyst characteristics evaluation are the same as the descriptions described above with respect to FIGS. 8 to 10. Here, for a buffer electrolyte aqueous solution, a solution of sodium hydroxide (NaOH), potassium hydroxide (KOH), and ammonia water (NH₄OH), of pH 13.6, is used.

With reference to FIG. 11, catalyst characteristics with respect to a nanostructure according to an exemplary embodiment and an iridium oxide (IrOₓ) nanoparticle as a comparative example are illustrated. The iridium oxide (IrOₓ) nanoparticle has a size of about 1 nm to 2 nm. In the case of an exemplary embodiment, more excellent catalyst characteristics are shown, as compared to the comparative example, and a Tafel slope is measured in a range of about 40 mV/decade to about 60 mV/decade.

When an overpotential value, a value obtained by subtracting an equilibrium potential of a reaction from an electrode potential in an electrochemical reaction, is calculated, in the case of a nanostructure according to an exemplary embodiment, a value of about 280 mV or less at an electrode current density of 10 mA/cm² or more is shown. When compared to the case in which iridium oxide (IrOₓ) , nickel iron oxide (NiFeOₓ), cobalt iron oxide (CoFeOₓ), nickel cobalt oxide (NiCoOₓ), or the like has a value of 320 mV to 400 mV, it is confirmed that the nanostructure according to an exemplary embodiment has excellent catalyst characteristics.

With reference to FIG. 12, a catalyst stability measurement result is illustrated. As a cyclic potential is repeatedly scanned, a change due to an increase in the number of cycles is determined. As illustrated in FIG. 12, it is confirmed that loss of an electrochemical surface area (ECSA) is insignificant after potential scanning 400 times. Thus, it is confirmed that a nanostructure according to an exemplary embodiment may stably function as a catalyst.

### Electrochemical reaction system application example

FIG. 13 is a schematic view of a water decomposition system including an oxygen evolution catalyst according to an exemplary embodiment.

With reference to FIG. 13, a water decomposition system 200 may include an electrolytic bath 210, a buffer electrolyte aqueous solution 220, a first electrode (an anode) 230, and a second electrode (a cathode) 240. The first electrode 230 and the second electrode 240 may be connected to a power supply. In an exemplary embodiment, in the water decomposition system 200, an ion exchange unit may be further disposed between the first electrode 230 and the second electrode 240.

Each of the first electrode 230 and the second electrode 240 may be formed of a semiconductor or conductive material. An oxygen evolution catalyst 260 may be disposed on at least one side of the first electrode 230, and the oxygen evolution catalyst 260 may include manganese oxide according to an exemplary embodiment described with reference to FIGS. 1 to 12, or a nanostructure including the same.

In the electrolytic bath 210, an inlet and an outlet such as an inlet pipe and a drain pipe may be further formed.

The buffer electrolyte aqueous solution 220 may serve as a supply source of water, used for a water decomposition reaction, and an acceptor of a proton, generated in a water decomposition reaction. The buffer electrolyte aqueous solution 220 may include, for example, at least one of potassium phosphate such as KH₂PO₄, K₂HPO₄, K₃PO₄ or a mixture thereof, and sodium phosphate. A pH of the buffer electrolyte aqueous solution 220 may be 2 to 14. In detail, when the oxygen evolution catalyst 260 according to the present disclosure is used, the buffer electrolyte aqueous solution 220 may have neutral conditions. To serve as an acceptor of the proton, the buffer electrolyte aqueous solution 220 may include a proton-accepting anion. Thus, even when a production amount of a proton (H⁺) increases as a water decomposition reaction is carried out, the proton-accepting anion accepts at least a portion of the proton, thereby reducing a pH reduction rate of the buffer electrolyte aqueous solution 220. The proton-accepting anion may include at least one of a phosphate ion, an acetate ion, a borate ion, and a fluoride ion.

When a voltage is applied between the first electrode 230 and the second electrode 240 in the water decomposition system 200, a reaction, in which oxygen is generated in the first electrode 230 and hydrogen is generated in the second electrode 240, may occur. Each half reaction is represented by reaction formulas 1 and 2.

[Reaction formula 1] 2H₂O → O₂ + 4H⁺ + 4e⁻

[Reaction formula 2] 4H⁺ + 4e⁻ → 2H₂

The oxygen evolution catalyst 260 according to an exemplary embodiment may be involved in a reaction in the first electrode 230, represented by reaction formula 1. Thus, a water decomposition reaction may be carried out at a low overpotential even under neutral conditions.

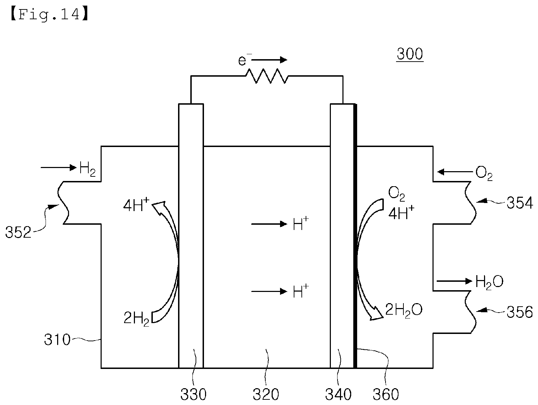

FIG. 14 is a schematic view of a fuel cell system including an oxygen evolution catalyst according to an exemplary embodiment.

With reference to FIG. 14, a fuel cell system 300 may include an electrolyte membrane 320, a first electrode (an anode) 330, and a second electrode (a cathode) 340. In addition, the fuel cell system 300 may include a cover portion 310 having first to third inlets/outlets 352, 354 and 356, and in which the first electrode 330 and the second electrode 340 in addition to the electrolyte membrane 320 are disposed.

The fuel cell system 300 according to an exemplary embodiment may be a solid oxide fuel cell (SOFC), but is not limited thereto. The first electrode 330 and the second electrode 340 in addition to the electrolyte membrane 320 may form a single unit cell, and a plurality of unit cells may be stacked to form a fuel cell.

In the fuel cell system 300, an electrochemical reaction may be carried out in a reverse direction to the water decomposition system 200 illustrated in FIG. 13. A cation may be generated by an oxidation reaction of hydrogen in the first electrode 330, and water may be generated by a reduction reaction of oxygen in the second electrode 340. In this case, since an electron is generated in the first electrode 330 and the electron is consumed in the second electrode 340, when two electrodes are connected to each other, electricity may flow therein.

Each of the first electrode 330 and the second electrode 340 may be formed of a semiconductor or conductive material. At least one side of the second electrode 340 may be coated with manganese oxide according to an exemplary embodiment described above with reference to FIGS. 1 to 12 or a nanostructure including the same, as an oxygen reduction reaction catalyst 360. The oxygen reduction reaction catalyst 360 according to an exemplary embodiment may be a material the same as the oxygen evolution catalyst 260 according to an exemplary embodiment illustrated in FIG. 13, but may be differently referred since the oxygen reduction reaction catalyst is involved in a reverse direction. Thus, the oxygen evolution catalyst according to the present disclosure may serve as a catalyst of an oxygen evolution reaction and a reverse reaction thereof.

The electrolyte membrane 320 may have the form of a proton conducting polymer membrane, and may allow a side of the first electrode 330 and a side of the second electrode 330 to be separated from each other and may allow a proton to flow therebetween, at the same time. The proton conducting polymer membrane may be, for example, NAFION®.

In the fuel cell system 300, an oxidation reaction and a reduction reaction are carried out at a useful rate, and the oxygen reduction reaction catalyst 360 according to an exemplary embodiment may be used to allow a reaction to occur at a reduced potential.

As a system including an oxygen evolution catalyst according to an exemplary embodiment, a water decomposition system and a fuel cell system have been exemplarily described, but the present disclosure is not limited thereto. In addition, an oxygen evolution catalyst or an oxygen reduction reaction catalyst according to an exemplary embodiment may be used for various electrochemical reaction systems.

While the present disclosure has been particularly shown and described with reference to exemplary embodiments thereof, but is not limited thereto. It will be apparent to those skilled in the art that various changes and modifications thereof may be made within the scope of the present disclosure, and therefore to be understood that such changes and modifications belong to the scope of the appended claims.

### [Industrial applicability]

An oxygen evolution catalyst, an electrode, and an electrochemical reaction system, according to an exemplary embodiment of the present disclosure, may be used for various electrochemical reaction systems including a water decomposition system and a fuel cell system.

## Claims

1. An oxygen evolution catalyst comprising non-stoichiometric manganese oxide comprising trivalent manganese and represented by Chemical formula (1),
Chemical formula (1): Mn_{1-δ}O,
where δ satisfies 0 < δ < 0.25, 0.25 < δ < 1/3, and 1/3 < δ < 0.5,
wherein, all of the trivalent manganese and divalent manganese are located in a surface of the manganese oxide.

2. The oxygen evolution catalyst of claim 1, wherein the manganese oxide is a nanoparticle having a size of 20 nm or less.

3. The oxygen evolution catalyst of claim 1, wherein the manganese oxide has a form of a thin film.

4. An oxygen evolution catalyst according to Claim 1 comprising:
a nanocore including the manganese oxide; and
a metal nanoparticle adsorbed on a surface of the nanocore.

5. The oxygen evolution catalyst of claim 4, wherein the metal nanoparticle comprises at least one of iridium (Ir), cobalt (Co), copper (Cu), nickel (Ni), iron (Fe), chromium (Cr), ruthenium (Ru), gold (Au), platinum (Pt), palladium (Pd), and rhodium (Rh).

6. The oxygen evolution catalyst of claim 4, wherein the nanocore has a size of 20 nm or less, and the metal nanoparticle has a size of 3 nm or less.

7. An electrode comprising the oxygen evolution catalyst of any one of claims 1 to 6.

8. An electrochemical reaction system comprising the oxygen evolution catalyst of any one of claims 1 to 6.

## Patentansprüche

1. Sauerstoff erzeugender Katalysator, umfassend nichtstöchiometrisches Manganoxid, das dreiwertiges Mangan umfasst und dargestellt wird durch die chemische Formel (1),
Chemische Formel (1): Mn_{1-δ}O,
wobei δ 0 < δ < 0,25, 0,25 < δ < 1/3 und 1/3 < δ < 0,5 erfüllt,
wobei sich das gesamte dreiwertige Mangan und zweiwertige Mangan in einer Oberfläche des Manganoxids befinden.

2. Sauerstoff erzeugender Katalysator nach Anspruch 1, wobei das Manganoxid ein Nanopartikel ist, das eine Größe von 20 nm oder weniger aufweist.

3. Sauerstoff erzeugender Katalysator nach Anspruch 1, wobei das Manganoxid die Form eines dünnen Films aufweist.

4. Sauerstoff erzeugender Katalysator nach Anspruch 1, umfassend:
einen Nanokern, einschließend das Manganoxid; und
ein Metall-Nanopartikel, das auf einer Oberfläche des Nanokerns adsorbiert ist.

5. Sauerstoff erzeugender Katalysator nach Anspruch 4, wobei das Metall-Nanopartikel mindestens eines von Iridium (Ir), Kobalt (Co), Kupfer (Cu), Nickel (Ni), Eisen (Fe), Chrom (Cr), Ruthenium (Ru), Gold (Au), Platin (Pt), Palladium (Pd) und Rhodium (Rh) umfasst.

6. Sauerstoff erzeugender Katalysator nach Anspruch 4, wobei der Nanokern eine Größe von 20 nm oder weniger aufweist und das Metall-Nanopartikel eine Größe von 3 nm oder weniger aufweist.

7. Elektrode, umfassend den Sauerstoff erzeugenden Katalysator nach einem der Ansprüche 1 bis 6.

8. Elektrochemisches Reaktionssystem, umfassend den Sauerstoff erzeugenden Katalysator nach einem der Ansprüche 1 bis 6.

## Revendications

1. Catalyseur de dégagement d'oxygène comprenant de l'oxyde de manganèse non stœchiométrique comprenant du manganèse trivalent et représenté par la formule chimique (1) :
formule chimique (1) : Mn_{1-δ}O,
où δ satisfait à la relation 0 < δ < 0,25, 0,25 < δ < 1/3 et 1/3 < δ < 0,5,
dans lequel tout le manganèse trivalent et tout le manganèse divalent sont situés dans une surface de l'oxyde de manganèse.

2. Catalyseur de dégagement d'oxygène selon la revendication 1, dans lequel l'oxyde de manganèse est sous forme d'une nanoparticule ayant une taille de 20 nm ou moins.

3. Catalyseur de dégagement d'oxygène selon la revendication 1, dans lequel l'oxyde de manganèse a la forme d'un film mince.

4. Catalyseur de dégagement d'oxygène selon la revendication 1, comprenant :
un nano-noyau incluant l'oxyde de manganèse, et
une nanoparticule de métal adsorbée sur une surface du nano-noyau.

5. Catalyseur de dégagement d'oxygène selon la revendication 4, dans lequel la nanoparticule de métal comprend au moins l'un parmi l'iridium (Ir), le cobalt (Co), le cuivre (Cu), le nickel (Ni), le fer (Fe), le chrome (Cr), le ruthénium (Ru), l'or (Au), la platine (Pt), le palladium (Pd) et le rhodium (Rh).

6. Catalyseur de dégagement d'oxygène selon la revendication 4, dans lequel le nano-noyau a une taille de 20 nm ou moins, et la nanoparticule de métal a une taille de 3 nm ou moins.

7. Électrode comprenant le catalyseur de dégagement d'oxygène selon l'une quelconque des revendications 1 à 6.

8. Système de réaction électrochimique comprenant le catalyseur de dégagement d'oxygène selon l'une quelconque des revendications 1 à 6.
